# EUROPEAN PATENT SPECIFICATION

(11) **EP 1 508 459 B1**
(45) Date of publication and mention of the grant of the patent: **24.11.2010**
(21) Application number: 04076740.2
(22) Date of filing: 10.06.2004
(51) Int. Cl.: B60G 9/00, B60G 11/113, B60G 11/46, B60B 35/08

(54) **Connection between round vehicle axle and suspension arm**
Verbindungselement zwischen einer Rundprofil-Fahrzeugachse und einem Aufhängungslenker
Dispositif de fixation entre un essieu de véhicule à profil en travers rond et un bras de suspension

(30) Priority: 19.08.2003 NL 1024125
(43) Date of publication of application: 23.02.2005
(73) Proprietor: WEWELER NEDERLAND B.V., 7332 AP Apeldoorn (NL)
(72) Inventor: Aalderink, Derk Geert, 7245 NV Laren (NL)
(74) Representative: Brookhuis, Hendrik Jan Arnold

(56) References cited:
- EP-A- 0 830 957
- EP-A- 1 155 883
- WO-A-00/71290
- WO-A-97/06022
- US-A- 5 112 078
- US-A- 5 127 668
- US-A1- 2001 020 775
- US-B2- 6 508 393

## Description

The invention relates to a connection between a round axle body of a vehicle and a suspension arm which extends in the longitudinal direction of the vehicle and crosses the axle body substantially at right angles, the connection comprising a support element, which is positioned between the axle body and the suspension arm and has a recess in which part of the axle body is accommodated, and also comprising clamping means, by which the support element and that part of the axle body which is accommodated therein are fixed to the suspension arm, the axle body, in the installed state, being pressed into the recess as a result of a clamping force provided by the clamping means, so that it bears against the inner wall of the recess, with a locking action being present between the support element and that part of the axle body which is accommodated in the support element.

US 6508393 shows an axle which is welded to an axle connector, which in turn is welded to a pivot arm.
EP 1155883 and EP 0830957 both dislcose a connection between an axle body and a suspension arm, wherein straps are fixing an axle pad and that part of the axle body which is accommodated therein to the suspension arm.

A connection of the above mentioned type is known from NL 1015231. The known connection has a support element, also known in the specialist field as an axle guide, with a recess which is formed symmetrically with respect to an imaginary vertical plane through the centre axis of the axle body. The result of this is that the edges of the recess, which extend parallel to the centre axis of the axle body, are located at substantially the same height. In an embodiment of the known connection in which the support element is arranged beneath the suspension arm, the said edges are located above the centre axis. In an alternative embodiment of the known connection, in which the support element is arranged above the suspension arm, the said edges are located beneath the centre axis. With the known connection, approximately 135° of the circumference of the axle body is accommodated in the recess. Furthermore, that part of the axle body which is accommodated in the support element is locked against undesirable rotation with respect to the support element by the axle body being securely welded to one of the edges of the recess.

During assembly, the axle body and the support element are clamped together by the clamping means. The edge of the recess as a result presses the axle material beneath it downwards. The axle body is deformed as a result, bulging outwards in some areas.

The welded edge of the recess furthermore acts as a rotation point for a moment loading on the axle in the event of loading on the suspension arm. At the other edge of the recess, a reaction force is produced on the axle body from the relatively rigid support element. This reaction force has a radial component with respect to the circumference of the axle body. This radial component is unfavourable, since it causes the axle body to be excessively deformed and to bulge out, in particular if the axle body is of thin-walled design. This problem also occurs with another form of locking.

It is an object of the invention to provide an improved connection of the type described above.

According to the invention, this feature is achieved by a connection of the type described in the preamble which is characterized in that the inner wall of the recess has two edges which run substantially parallel to the centre axis of the axle body and are located in an imaginary plane which is at an angle to the horizontal.

The design according to the invention means that the force at the relevant edge of the support element is more successfully transmitted along the axle body, with the result that the in particular thin-walled axle body does not bulge out as much. Furthermore, the risk of damage to the axle body is also reduced as a result.

In the connection according to the invention, the inner wall, between its edges, covers 170°-200° of the circumference of that part of the axle body which is accommodated in the recess, preferably 180°-200°.

Further preferred embodiments of the connection according to the invention are defined in the subclaims.

The invention will be explained in more detail in the following description of a number of embodiments with reference to the drawing, in which:
Fig. 1a shows a side view of a connection in accordance with the prior art without clamping means,
Fig. 1b shows a detail of the connection from Fig. 1a,
Fig. 1c shows a side view of a connection according to the invention without clamping means,
Fig. 2 shows a side view of an embodiment of the connection from Fig. 1b with clamping means,
Fig. 3 shows a view of the connection shown in Fig. 2 as seen in the direction of arrow III in Fig. 2,
Fig. 4 shows a side view of another embodiment of the connection according to the invention,
Fig. 5 shows a side view of yet another embodiment of the connection according to the invention, and
Fig. 6 shows a side view of yet another embodiment of the connection according to the invention.

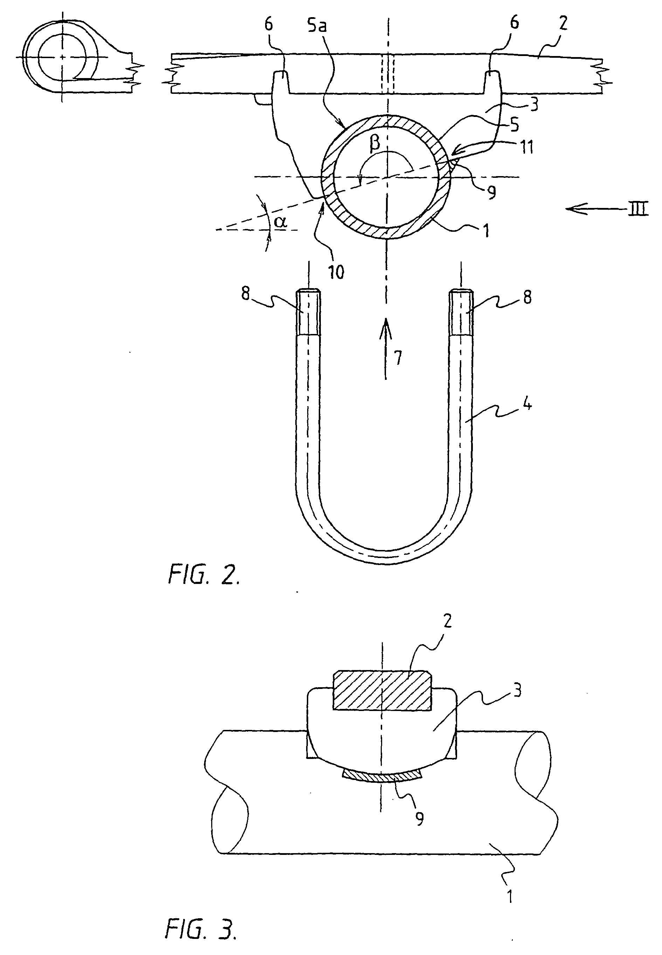

Figs 2 and 3 show a connection between a thin-walled axle body 1 of a vehicle and a suspension arm 2 which extends in the longitudinal direction of the vehicle and crosses the axle body 1 substantially at right angles. The axle body 1 is designed as a substantially round tube. At the location where the suspension arm 2 crosses the axle body 1, the suspension arm is substantially planar (straight).

The connection comprises a support element 3 and clamping means 4. The support element 3 is positioned on the underside of the suspension arm 2 and has a recess 5 on the side remote from the suspension arm 2, in which part of the axle body 1 can be accommodated. The support element 3 is provided with projections 6 which extend along either side of the suspension arm 2. These projections 6 are responsible for ensuring that the support element 3 and the suspension arm 2 cannot move with respect to one another in the transverse direction of the suspension arm 2.

The clamping means 4 are positioned around the axle body 1 in the direction indicated by arrow 7. The limbs of the clamping means 4 are fitted through cutouts (not shown) in the support element 3 and along the suspension arm 2 and through holes which are arranged in a clamping plate (not shown) arranged beneath the suspension arm 2. The limbs of the clamping means 4 are each provided, at their end, with a threaded section 8 which is able to interact with threaded nuts (not shown) which can be used to tighten the connection.

When the connection has been tightened, the axle body 1 is accommodated in a force-fitting manner in the recess 5 and is pressed onto the inner wall 5a. The front edge 10 of the recess 5 is in this embodiment located at a lower level than the rear edge 11 of the recess. As a result, the front edge 10 and the rear edge 11 define an imaginary flat plane which is directed obliquely to the rear and downwards with respect to the horizontal, i.e. is at an angle α with the horizontal.

At the rear edge 11 of the recess there is a weld 9, by means of which the support element 3 is fixedly connected to the axle body 1. The weld 9 extends substantially parallel to the centre axis of the axle body 1, as shown in Fig. 3. Without the weld 9, the axle body 1 would be able to rotate about its centre axis when the vehicle is in use, as a result of torsional forces. The weld 9 therefore ensures that the axle body 1 is locked against this rotation.

The inner wall 5a of the recess 5 which engages on the axle body 1, between the front edge 10 and the rear edge 11, describes an arc which, in the example shown, covers an angle β of approximately 180°. It is desired for the angle β to be in a range from 170°-200°, preferably in a range from 180°-200°, so that on the one hand the axle body 1 can be mounted in the recess 5, but on the other hand disadvantageous radial force components on the axle body 1 are avoided as far as possible.

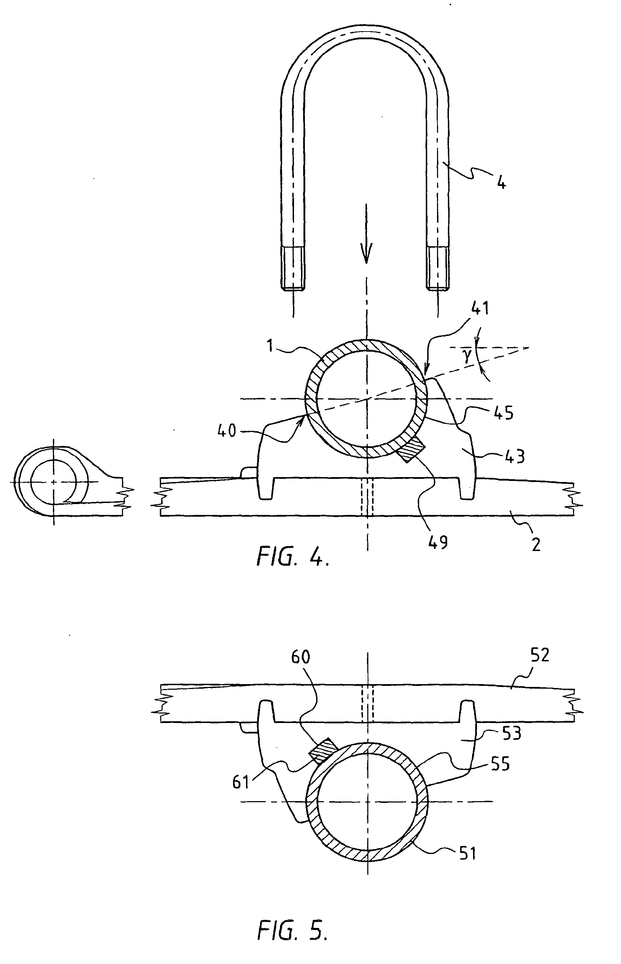

Another embodiment of the invention is shown in Fig. 5. This embodiment has a support element 53 for the connection between axle body 51 and suspension arm 52. A second recess 60 is arranged in the inner wall of the recess 55 in support element 53. A cotter 61 is arranged on the axle body 51. In the assembled state, the cotter 61 is accommodated in the second recess 60 in order to form the locking action between the support element 53 and that part of the axle body 51 which is accommodated in the support element 53.

Fig. 4 shows yet another embodiment, in which the axle body 1 runs above the suspension arm 2. The design of the support element 43 positioned between the suspension arm 2 and the axle body 1 substantially corresponds to the support element 3 shown in Fig. 2. In this embodiment, the support element 43 has a recess 45 with a front edge 40 and a rear edge 41. The front edge 40 is located at a lower level than the rear edge 41. As a result, the front edge 40 and the rear edge 41 define an imaginary flat plane which is directed obliquely forwards and upwards with respect to the horizontal, i.e. is at an angle y with respect to the horizontal. The support element 43 and the axle body 1 are locked with respect to one another by a cotter 49 in substantially the same way as in Fig. 5. Of course, it is also possible for the axle body 1 located at the top to be locked in a different way with respect to the support element 43, for example by welding.

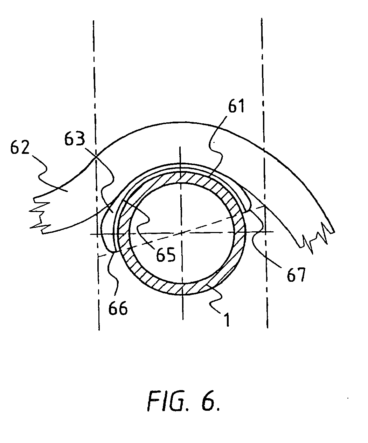

Yet another embodiment of the invention is shown in Fig. 6. This embodiment has a curved suspension arm 62. A support element 63 for axle body 61 is arranged in the cavity formed by the curvature of the suspension arm 62. The support element 63 fits into the curvature of the suspension arm 62. The support element 63 has a recess 65 in which the axle body 61 is accommodated. The edges 66, 67 of the recess 65 lie in an imaginary plane which extends obliquely at an angle with respect to the horizontal.

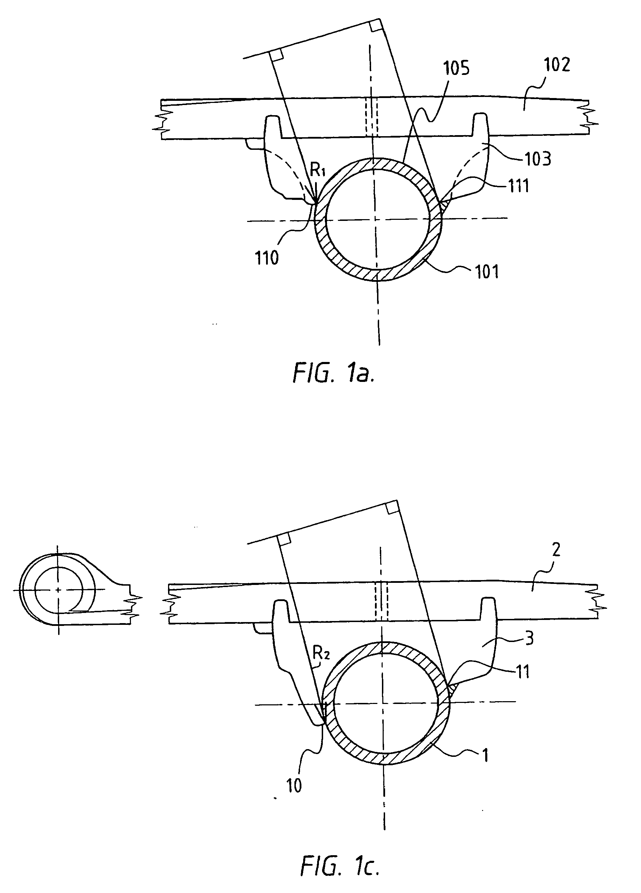

The effect of the invention will be explained in more detail in the text which follows on the basis of the differences with respect to the prior art. Part of the known connection from NL 1015231 is shown in Fig. 1a. The known connection between axle body 101 and suspension arm 102 has a support element 103 with a recess 105 which is formed symmetrically with respect to an imaginary vertical plane through the centre axis of the axle body 101. The result of this is that the edges 110 and 111 of the recess 105, which extend parallel to the centre axis of the axle body 101, are located at substantially the same height. In the embodiment of the known connection which is shown, the support element 103 is arranged beneath the suspension arm 102 and the said edges 110 and 111 are located above the centre axis of the axle body 101. With the known connection, approximately 135° of the circumference of the axle body 101 is accommodated in the recess 105. Furthermore, that part of the axle body 101 which is accommodated in the support element 103 is locked against undesirable rotation with respect to the support element 103 by the axle body 101 being securely welded to one of the edges, in the example shown the rear edge 111, of the recess 105. It should be noted that it is also possible for the axle body to be welded in place at both edges.

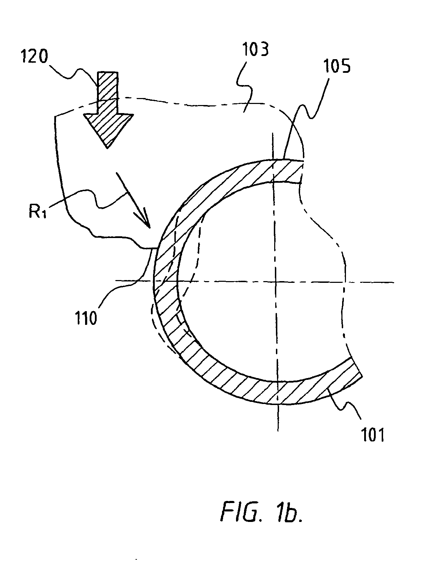

Fig. 1b shows a detailed view of part of the axle body 101 and the support element 103. During assembly, the axle body 101 and the support element 103 are clamped forcibly together by the clamping means, corresponding to the clamping means 4 shown in Fig. 2, in the vertical direction in the figure (indicated by arrow 120). As a result, the edge 110 of the recess 105 presses the axle material beneath it downwards. The axle body 101 is deformed as a result, as indicated by the dashed line, being pressed inwards in one region and bulging outwards in an adjacent region.

In the connection according to the invention, the edges 10, 11 lie in an imaginary plane which is at an angle α with respect to the horizontal (cf. Fig. 2), and the edge does not press vertically onto the axle body 1, preventing the axle material from bulging out, or at least reducing the extent to which it does so, since the forces tend to be transmitted along the axle body 1.

Another effect which may occur in the connection which is known from NL 1015231 is that the welded edge 111 of the recess 105, under loading from the suspension arm 102, acts as a rotation point for a moment loading on the axle body 101. A reaction force, indicated by arrow R1 in Fig. 1a, on the part of the relatively rigid support element 103 acting on the axle body 101, is produced at the other edge 110 of the recess 105. This reaction force R1 has a radial component with respect to the circumference of the axle body 101. This radial component is unfavourable since it can cause damage to the axle body 101, in particular if the latter is of thin-walled design.

As is illustrated in Fig. 1c, in the connection according to the invention, a reaction force, denoted by arrow R2, which is oriented substantially tangentially, i.e. does not have a radial component or only has a small radial component, is obtained at the edge 10 of the support element 3, with the result that less load is exerted on the thin-walled axle body 1, and there is therefore less risk of the latter being damaged.

## Claims

1. Connection between a round axle body (1; 51) of a vehicle and a suspension arm (2; 52) which extends in the longitudinal direction of the vehicle and crosses the axle body (1; 51) substantially at right angles, the connection comprising a support element (3; 43; 53), which is positioned between the axle body (1; 51) and the suspension arm (2; 52) and has a recess (5; 45; 55) in which part of the axle body (1; 51) is accommodated, and also comprising clamping means (4), by which the support element (3; 43; 53) and that part of the axle body (1; 51) which is accommodated therein are fixed to the suspension arm (2; 52), the axle body (1; 51), in the installed state, being pressed into the recess (5; 45; 55) as a result of a clamping force provided by the clamping means (4), so that it bears against the inner wall (5a) of the recess (5; 45; 55), with a locking action against undesirable rotation of the axle body with respect to the support element being present between the support element (3; 43; 53) and that part of the axle body (1; 51) which is accommodated in the support element (3; 43; 53), **characterized in that** the inner wall (5a) of the recess (5; 45; 55) has two edges (10, 14; 40, 41)which run substantially parallel to the centre axis of the axle body (1; 51) and are located in an imaginary plane which is at an angle to the horizontal, and wherein the inner wall (5a), between the edges (10, 14; 40, 41), covers an angle β of the circumference of that part of the axle body (1; 51) which is accommodated in the recess (5; 45; 55), the angle β lying in the range from 170°-200°.

2. Connection according to claim 1, in which the angle β is in the range from 180°-200°.

3. Connection according to claim 1, in which the support element (3; 53) and that part of the axle body (1; 51) which is accommodated therein are located on the underside of the suspension arm (2; 52), and the front edge (10; 40) of the recess (5; 45) is at a lower level than the rear edge (11; 41) of the recess (5; 45).

4. Connection according to claim 3, in which that part of the axle body (1) which is accommodated in the support element (3) is securely welded only to the rear edge (11) of the recess (5) in order to form the locking action between the support element (3) and that part of the axle body (1) which is accommodated in the support element (3).

5. Connection according to claim 1, in which the support element (43) and that part of the axle body (1) which is accommodated therein are located on the top side of the suspension arm (2).

6. Connection according to claim 5, in which the front edge (40) of the recess (45) is at a lower level than the rear edge (41) of the recess (45).

7. Connection according to claim 1, in which there is a second recess (60) in the inner wall of the recess (45; 45), and in which there is a cotter (49; 61) arranged on the axle body (51), which cotter (49; 61), in the assembled state, is accommodated in the second recess (60) in order to form the locking action between the support element (43; 53) and that part of the axle body (1; 51) which is accommodated in the support element (43; 53).

8. Vehicle provided with an axle body (1; 41; 51) and a suspension arm (2; 52) which are connected to one another by means of a connection according to one of claims 1-6.

## Patentansprüche

1. Anschluss zwischen einem runden Achskörper (1; 51) eines Fahrzeugs und einem Aufhängungsarm (2; 52), welcher sich in der Längsrichtung des Fahrzeugs erstreckt und den Achskörper (1; 51) im Wesentlichen unter rechten Winkeln kreuzt, wobei der Anschluss ein Stützelement (3; 43; 53) umfasst, welches zwischen dem Achskörper (1; 51) und dem Aufhängungsarm (2; 52) positioniert ist und eine Aussparung (5; 45; 55) hat, in welcher ein Teil des Achskörpers (1; 51) aufgenommen ist, und auch eine Klemmeinrichtung (4) aufweist, durch welche das Stützelement (3; 43; 53) und der Teil des Achskörpers (1; 51), welcher darin aufgenommen ist, an dem Aufhängungsarm (2; 52) befestigt sind, wobei der Achskörper (1; 51) in dem eingebauten Zustand aufgrund einer Klemmkraft, die durch die Klemmeinrichtung (4) bereitgestellt wird, in die Aussparung (5; 45; 55) gedrückt wird, so dass dieser an der Innenwand (5a) der Aussparung (5; 45; 55) anliegt, wobei eine Blockierwirkung gegenüber einer ungewünschten Drehung des Achskörpers in Bezug zum Stützelement zwischen dem Stützelement (3; 43; 53) und dem Teil des Achskörpers (1; 51), welcher in dem Stützelement (3; 53; 53) aufgenommen ist, vorhanden ist, **dadurch gekennzeichnet, dass** die Innenwand (5a) der Aussparung (5; 45; 55) zwei Kanten (10, 14; 40, 41) hat, die im Wesentlichen parallel zu der Mittelachse des Achskörpers (1; 51) verlaufen und in einer imaginären Ebene liegen, die sich in einem Winkel zur Horizontalen befindet, und wobei die Innenwand (5a) zwischen den Kanten (10, 14; 40, 41) einen Winkel β des Umfangs des Teils des Achskörpers (1; 51) überdeckt, der in der Aussparung (5; 45; 55) aufgenommen ist, wobei der Winkel β im Bereich von 170° bis 200° liegt.

2. Anschluss nach Anspruch 1, in welchem der Winkel β im Bereich von 180° bis 200° liegt.

3. Anschluss nach Anspruch 1, in welchem das Stützelement (3; 53) und der Teil des Achskörpers (1; 51), welcher darin aufgenommen ist, auf der Unterseite des Aufhängungsarms (2; 52) angeordnet sind und die Vorderkante (10; 40) der Aussparung (5; 45) an einem niedrigeren Niveau als die Hinterkante (11; 41) der Aussparung (5; 45) liegt.

4. Anschluss nach Anspruch 3, in welchem der Teil des Achskörpers (1), welcher in dem Stützelement (3) aufgenommen ist, nur an der Hinterkante (11) der Aussparung (5) fest angeschweißt ist, um die Blockierwirkung zwischen dem Stützelement (3) und dem Teil des Achskörpers (1), welcher in dem Stützelement (3) aufgenommen ist, zu bilden.

5. Anschluss nach Anspruch 1, in welchem das Stützelement (43) und der Teil des Achskörpers (1), welcher darin aufgenommen ist, auf der Oberseite des Aufhängungsarms (2) liegen.

6. Anschluss nach Anspruch 5, in welchem sich die Vorderkante (40) der Aussparung (45) an einem niedrigeren Niveau als die Hinterkante (41) der Aussparung (45) befindet.

7. Anschluss nach Anspruch 1, in welchem eine zweite Aussparung (60) in der Innenwand der Aussparung (45; 45) vorhanden ist, und in welchem ein Splint (49; 61) auf dem Achskörper (51) angeordnet ist, wobei der Splint (49; 61) im zusammengebauten Zustand in der zweiten Aussparung (60) aufgenommen ist, um die Blockierwirkung zwischen dem Stützelement (43; 53) und dem Teil des Achskörpers (1; 51), welcher in dem Stützelement (43; 53) aufgenommen ist, zu bilden.

8. Fahrzeug, versehen mit einem Achskörper (1; 41; 51) und einem Aufhängungsarm (2; 52), welche miteinander mithilfe eines Anschlusses nach einem der Ansprüche 1 bis 6 verbunden sind.

## Revendications

1. Raccordement entre un corps d'essieu rond (1 ; 51) d'un véhicule et un bras de suspension (2 ; 52) qui s'étend dans la direction longitudinale du véhicule et traverse le corps d'essieu (1 ; 51) sensiblement en angle droit, le raccordement comprenant un élément de support (3 ; 43 ; 53), qui est positionné entre le corps d'essieu (1 ; 51) et le bras de suspension (2 ; 52) et a un évidement (5 ; 45 ; 55) dans lequel une partie du corps d'essieu (1 ; 51) est logée, et comprenant également des moyens de serrage (4) grâce auxquels l'élément de support (3 ; 43 ; 53) et cette partie du corps d'essieu (1 ; 51) qui est logée à l'intérieur, sont fixés sur le bras de suspension (2 ; 52), le corps d'essieu (1 ; 51), à l'état installé, étant comprimé dans l'évidement (5 ; 45 ; 55) en raison d'une force de serrage fournie par les moyens de serrage (4), de sorte qu'il s'appuie contre la paroi interne (5a) de l'évidement (5 ; 45 ; 55), avec une action de blocage contre la rotation indésirable du corps d'essieu par rapport à l'élément de support qui est présent entre l'élément de support (3 ; 43 ; 53) et cette partie du corps d'essieu (1 ; 51) qui est logée dans l'élément de support (3 ; 43 ; 53), **caractérisé en ce que** la paroi interne (5a) de l'évidement (5 ; 45 ; 55) a deux bords (10, 14 ; 40, 41) qui s'étendent sensiblement parallèlement à l'axe central du corps d'essieu (1 ; 51) et sont positionnés dans un plan imaginaire qui est positionné selon un angle par rapport à l'horizontale, et dans lequel la paroi interne (5a), entre les bords (10, 14 ; 40, 41), couvre un angle β de la circonférence de cette partie du corps d'essieu (1 ; 51) qui est logée dans l'évidement (5 ; 45, 55), l'angle β étant de l'ordre de 170° - 200°.

2. Raccordement selon la revendication 1, dans lequel l'angle β est de l'ordre de 180° - 200°.

3. Raccordement selon la revendication 1, dans lequel l'élément de support (3 ; 53) et cette partie du corps d'essieu (1 ; 51) qui est logée à l'intérieur de ce dernier, sont positionnés sur la face inférieure du bras de suspension (2 ; 52) et le bord avant (10 ; 40) de l'évidement (5 ; 45) est à un niveau inférieur par rapport au bord arrière (11 ; 41) de l'évidement (5 ; 45).

4. Raccordement selon la revendication 3, dans lequel cette partie du corps d'essieu (1) qui est logée dans l'élément de support (3) est soudée de manière fixe uniquement sur le bord arrière (11) de l'évidement (5) afin de former l'action de blocage entre l'élément de support (3) et cette partie du corps d'essieu (1) qui est logée dans l'élément de support (3).

5. Raccordement selon la revendication 1, dans lequel l'élément de support (43) et cette partie du corps d'essieu (1) qui est logée à l'intérieur de ce dernier, sont positionnés sur le côté supérieur du bras de suspension (2).

6. Raccordement selon la revendication 5, dans lequel le bord avant (40) de l'évidement (45) est à un niveau inférieur par rapport au bord arrière (41) de l'évidement (45).

7. Raccordement selon la revendication 1, dans lequel on trouve un deuxième évidement (60) dans la paroi interne de l'évidement (45 ; 45) et dans lequel on trouve une clavette (49 ; 61) agencée sur le corps d'essieu (51), laquelle clavette (49 ; 61), à l'état assemblé, est logée dans le deuxième évidement (60) afin de former l'action de blocage entre l'élément de support (43 ; 53) et cette partie du corps d'essieu (1 ; 51) qui est logée dans l'élément de support (43 ; 53).

8. Véhicule doté d'un corps d'essieu (1 ; 41 ; 51) et d'un bras de suspension (2 ; 52) qui sont raccordés l'un à l'autre au moyen d'un raccordement selon l'une quelconque des revendications 1 à 6.
